# EUROPEAN PATENT SPECIFICATION

(11) **EP 4 316 917 B1**
(45) Date of publication and mention of the grant of the patent: **03.09.2025**
(21) Application number: 23188729.0
(22) Date of filing: 31.07.2023
(51) Int. Cl.: B60R 13/02

(54) **CENTER CONSOLE AND ASSEMBLY METHOD**
MITTELKONSOLE UND MONTAGEVERFAHREN
CONSOLE CENTRALE ET PROCÉDÉ D'ASSEMBLAGE

(30) Priority: 02.08.2022 ES 202230716
(43) Date of publication of application: 07.02.2024
(73) Proprietor: Seat, S.A., 08760 Martorell (ES)
(72) Inventor: ROSELLÓ ROIG, Núria, 08760 MARTORELL (ES); MALDONADO ESTEBAN, Carlos, 08760 MARTORELL (ES)
(74) Representative: Pons IP

(56) References cited:
- EP-A2- 2 036 774
- DE-A1- 10 043 656
- US-B1- 7 513 550

## Description

### Technical field

The present invention relates, in a first aspect, to a center console system wherein the console is linked both to the floor of the passenger compartment and to the dashboard of the vehicle.

A second aspect of the present invention relates to an assembly method for assembling the center console of the first aspect of the invention.

### Prior state the art

Different types of center consoles configured to be linked to the floor of the passenger compartment are known, such as the one disclosed in document US5106143A, which includes fixing components for fixing to the floor of the vehicle, said components being snap-fit. However, these fixing components would not make it possible to overcome the manufacturing tolerances of the perimeter trim parts with respect to the floor. Nor would the consoles with trim pieces covering the frame or fixing components of the types disclosed in documents EP0047858A1 and US9308871B2 overcome said tolerances.

Document EP2036774A2 discloses a console (10) that has two lateral walls (11, 41) with a predetermined support zone (A) at a level of an opening, where the zone passes during assembling of the console near a portion of a crossing unit e.g. handbrake lever. An upper wall receives an upper facade (20) with a support (31) e.g. cup holder, covering the opening. A flexible support tab (44) is formed in the zone of the lateral walls, where the tab is retracted towards an exterior during assembling of the console with a passage of the portion near the crossing unit and withdraws its support position when the console is assembled.

Document DE10043656A1 discloses a console that consists of a base element and a connection element (4) fastened to the dashboard. The base element (3) is directly/indirectly fixed to the vehicle body. An overlapping section between base and connection elements is adjustable in longitudinal console direction, so that the connection element can be moved relative to the base element to adapt to the transitional area between dashboard (2) and central console. The two elements are connected via a bracket (13) with long slot, and a projection engaging in the slot.

### Description of the invention

The present invention relates, according to a first aspect, to a center console for vehicles with a passenger compartment with the features of claim 1, which makes it possible to offset manufacturing and assembly tolerances relating to the anchoring between the console and the floor of the passenger compartment. In addition, according to a second aspect, it proposes an assembly method, with the features of claim 6, for assembling the console that can be carried out in a few steps, in a very short period of time and without the need for tools.

The center console is of the type comprising:
- a structural body defined by a base and an upper portion, the base being anchorable to the floor of the passenger compartment, and the base and the upper portion forming a single body that moves together,
- at least one perimeter trim piece configured to be linked to the structural body and cover at least a perimeter portion of the base of the structural body. Thus, the at least one perimeter trim piece can cover part of each of the right and left sides of the base of the structural body, giving the center console a correct visual appearance.

Unlike center consoles known in the state of the art, the one proposed by the present invention is characterized in that the upper portion of the structural body comprises an overlapping flange arranged perimetrally and projecting downwards (generating a cavity suitable for housing a flange), at the same time that the upper end of the at least one perimeter trim piece comprises an overlapping flange projecting upwards (for example, I-shaped or L-shaped) and sized to fit snugly on the inner side of said overlapping flange, such that said at least one perimeter trim piece is displaceable, at least according to a vertical direction, with respect to the structural body. Likewise, said overlapping flange is vertically sized to be at least partially covered by the overlapping flange in any displacement position of the at least one perimeter trim piece with respect to the structural body in its use condition, while the at least one perimeter trim piece is sized to cover said at least one perimeter portion of the structural body from the floor of the passenger compartment to the overlapping flange.

As a result of the present configuration, the at least one perimeter trim piece is vertically displaceable with respect to the structural body without separating from the floor regardless of the height position of the structural body, being able to offset or absorb possible vertical tolerances that may exist in said components. Thus, the overlapping flange, which is located at the upper end of its respective perimeter trim piece, is arranged between the inner face or surface of said perimeter trim piece, covered, according to a transverse direction perpendicular to the longitudinal forward movement direction of the vehicle, by the overlapping flange.

According to the invention, the structural body and a non-visible side of the at least one perimeter trim piece comprise respective transverse retention means configured to be retained together and limit a displacement of said at least one perimeter trim piece with respect to the structural body according to a direction substantially transverse to the sagittal plane of the structural body.

According to an embodiment of said optional manner, one of the transverse retention means (preferably the inner face of the at least one perimeter trim piece) comprise a transverse protrusion extending at least in a direction substantially transverse to the longitudinal direction of the structural body and comprising at least one U-shaped portion, and the other transverse retention means (preferably the base of the center console) comprise a transverse flange with at least one reverse L-shaped end portion, the transverse protrusion being sized in height to receive the transverse flange loosely in the vertical direction and sized in width to receive the transverse flange snugly therein in said substantially transverse direction. Thus, at least one non-visible side of the at least one perimeter trim piece comprises U-shaped transverse protrusions, as transverse retention means, configured to receive reverse L-shaped transverse flanges arranged on at least one side of the structural body. Said transverse retention means have the purpose of mechanically linking the at least one perimeter trim piece with the base of the structural body, limiting and blocking the displacement between both components according to a transverse direction of the vehicle, that is, according to a direction perpendicular in the rolling plane of the vehicle to the longitudinal forward movement direction of the vehicle. Said U-shaped transverse protrusions are sized in height to receive said transverse flanges loosely in the vertical direction, allowing a relative displacement in said vertical direction of the transverse protrusion with respect to the transverse flange. In the same way, said U-shaped transverse protrusions are sized such that they allow a relative displacement in the longitudinal direction of the transverse protrusion with respect to the transverse flange. Finally, said transverse flanges are sized in width to snugly receive the transverse protrusions therein in the transverse direction. In this way, they block the relative movement of the at least one perimeter trim piece with respect to the structural body in a substantially transverse direction, that is, perpendicular to the sagittal plane of the structural body, while allowing relative displacement both vertically and in the longitudinal forward movement direction of the vehicle.

The structural body and at least one non-visible side of the at least one perimeter trim piece comprise respective pivoting means arranged laterally and configured to be pivotally anchored to each other, allowing the at least one perimeter trim piece to pivot with respect to the structural body in the sagittal plane. These pivot means can be both at the front part and at the rear part of the center console, although they are preferably at the rear part. As an option, one of the pivot means comprise a rotation gap defined by a gap extending in a direction transverse to the structural body (that is, perpendicular to its sagittal plane), preferably to each of the lateral ends of the base of the center console, both rotation gaps being coaxial with each other, and the other pivot means comprise a respective rotation pivot defined by a protrusion with a circular prism geometry and sized to pivot around said rotation gap, said rotation pivots preferably being on an unseen inner surface of the perimeter trim piece. In an assembly situation, the rotation pivots are inserted into the respective rotation gaps, so that a relative rotation is allowed according to an axis arranged in the transverse direction of the vehicle, there being at least one degree of freedom in the rotation of the at least one trim piece with respect to the base of the structural body.

According to an embodiment where the center console comprises the transverse retention means and the pivot means, both of which are arranged at a distance from each other and configured to allow the vertical displacement of the at least one perimeter trim piece with respect to the structural body according to a pivoting movement, in particular, for those areas of the perimeter trim piece far from the pivot means.

Preferably, the center console comprises a first anchoring piece configured to be anchored to the floor of the passenger compartment, that is, retained and without relative movement with respect to the passenger compartment. This first anchoring piece and at least one non-visible side of the at least one perimeter trim piece comprise respective vertical retention means, located far from said pivot means (preferably located in the front part of the center console, in accordance with the preferred position at the rear part of said pivot means). The vertical retention means are configured to be retained vertically with respect to one another, such that the portion of the at least one perimeter trim piece in which they are located is mechanically linked with the floor of the passenger compartment. Preferably, one of the vertical retention means comprise a longitudinal guide, preferably arranged in the first anchoring piece on the floor of the passenger compartment of the vehicle, and the other vertical retention means comprise a transverse pivot in a position coinciding with said longitudinal guide, preferably on the non-visible side of the at least one perimeter trim piece, suitable for being retained vertically in the longitudinal guide. The vertical position of the perimeter trim piece with respect to the floor of the passenger compartment of the vehicle is thereby limited. Even more preferably, the longitudinal guide and/or the transverse pivot comprise an inclined wall portion, configured to generate a downward displacement of the portion of the at least one perimeter trim piece in which it is located when the structural body is displaced forward. In this way it is possible that, although the structural body of the center console pivots, for example, in an upward movement with respect to the floor of the passenger compartment of the vehicle, the at least one perimeter trim piece continues in contact with the floor, due to the retaining action of the vertical retention means between the floor of the passenger compartment of the vehicle and said perimeter trim piece.

In a possible embodiment, the center console comprises a second anchoring piece also configured to be anchored to the floor of the passenger compartment, while the structural body of the center console comprises a front portion configured to be fixed to the dashboard. In this embodiment, both the second anchoring piece and the rear portion of the structural body comprise respective pivoting linkage means configured to be pivotally linked with each other, with the intention of allowing the structural body to pivot in its sagittal plane (the sagittal plane being defined as the vertical midplane of the structural body defined in the longitudinal forward movement direction of the vehicle), that is, to pivot the structural body according to a horizontal axis arranged in the direction transverse to the forward movement direction of the vehicle. This embodiment allows the front portion of the structural body to be displaced vertically, according to a pivoting movement, for linking the same with the dashboard. In this way and as a result, it is possible to offset or absorb the tolerances existing in the attachment of said structural body with respect to the dashboard, especially in cases where the design of the dashboard comprises a protrusion or spine projecting in a diagonal direction, intended to be linked with the structural body.

In a preferred embodiment, one of the pivoting linkage means (preferably those of the second anchoring piece) comprise two guides that extend in said longitudinal direction, that is, parallel to said sagittal plane in the forward movement direction of the vehicle. In turn, the other pivoting linkage means (preferably those of the structural body) comprise two coaxial pivots that extend perpendicular to said sagittal plane, sized to form a single pivot axis and slide through said guides, so that the pivoting linkage occurs in any of the positions of the pivots in the respective guides.

In a possible implementation, each guide extends on a lateral side of the second anchoring piece, both guides being mutually symmetrical to one another according to said sagittal plane, while said pivots are located at the lower end of the structural body. Even more preferably, each guide defines an elongated slot in said longitudinal direction, the height of the slots being substantially equal to the dimensions of the pivots, such that the slots restrict the vertical movement of the pivots. Consequently, when each pivot is coupled to the respective guide, said guide limits the displacement of the structural body both in the vertical direction and in the extension direction of the pivots, that is, in the transverse direction perpendicular to said sagittal plane. In this way, the structural body, once coupled to the second anchoring piece through the pivoting linkage means, comprises two degrees of freedom: a displacement according to the longitudinal direction and a rotation or pivot in each of the different displacement positions along said longitudinal direction. In this way, the center console can be displaced in the longitudinal direction until it approaches the dashboard and can pivot, in its sagittal plane until being fixed to the dashboard. Consequently, the coupling between said guides and said coaxial pivots limits the vertical displacement of the rear area of the structural body of the center console. In turn, it also limits the transverse displacement of said rear area of the structural body of the center console. Once the center console is positioned in its final position according to said longitudinal forward movement direction of the vehicle, the center console assembly can be pivoted on a pivot axis according to the transverse direction, allowing the front part of said center console to be displaced vertically according to a pivoting movement to make contact with the dashboard.

Preferably, at least one of the guides comprises a funnel-shaped entry (that is, the end of the guide through which the respective pivot enters, said end being the furthest from the dashboard of the vehicle), provided with an access opening the vertical dimension of which is greater than that of the respective pivot and of a transition section the vertical dimension of which decreases from that of the access opening to that of said elongated slot as it extends longitudinally from the access opening to said elongated slot. In this way, the linking of the structural body with the second anchoring piece is facilitated, without the need for visual contact by the operator during the process of handling the structural body with respect to the second anchoring piece, specifically, during the process of introducing each pivot in its respective access opening of the guide.

In a possible embodiment, the front portion of the structural body and the first anchoring piece each comprise respective spring linkage means. Specifically, these spring linkage means are suitable for being linked together, with a vertical pressure being exerted such that it generates an upward displacement of the front portion of the structural body with respect to the floor of the passenger compartment. As a result, a height adjustment of the front portion of the structural body is allowed to offset possible tolerances in the mechanical linkage with the dashboard.

In a possible embodiment, respective spring linkage means are configured to interlock with each other and deflect the front portion of the structural body in an upward direction as the structural body is displaced horizontally forward, according to the longitudinal direction of displacement, with respect to the floor of the passenger compartment. For example, one of the spring linkage means (preferably those of the first anchoring piece) comprise a semi-rigid flange with at least one oblique portion forming a ramp (such as a pyramid-shaped cantilever) and the other spring linkage means (following the same example, preferably those of the structural body) comprise a rigid surface that deflects the front portion of the structural body in an upward direction when displaced forward and colliding with said ramp. In this way, the displacement movement in the longitudinal direction of the center console is utilized (when it is displaced along the guides of the pivoting linkage means) to vertically push the front portion of the center console, to make contact with the dashboard. Said upward movement of the front portion of the center console is possible as a result of the pivotal movement allowed by the pivoting linkage means.

In a preferred embodiment, the structural body comprises:
- a frame piece, which is the one provided with the base, as well as with one of said pivoting linkage means and/or with one of said spring linkage means, and
- at least one upper trim piece, mechanically linked to the frame piece and covering at least an upper part thereof (preferably the entire upper part of the frame piece), which is provided with the overlapping flange.

In this last embodiment, the front and/or upper ends, both of the upper trim piece and of the frame piece (which can comprise a protrusion extending inside the at least one upper trim piece) can be configured to contact and be fixed to the dashboard of the passenger compartment.

In relation to the assembly of the present center console, the corresponding assembly method comprises the steps of:
a) fitting the overlapping flange, arranged at the upper end of the at least one perimeter trim piece, inside the overlapping flange arranged perimetrally at the lower end of the upper portion of the structural body, such that said at least one perimeter trim piece is displaceable, at least according to a vertical direction, with respect to the structural body, and
b) fitting the transverse retention means together,
c) anchoring respective pivot means together, and
d) anchoring the base of the structural body to the floor of the passenger compartment.

In a possible embodiment of the method, wherein the overlapping flange generates a cavity, step a) includes housing the overlapping flange of the at least one perimeter trim piece in the cavity generated by the overlapping flange of the structural body.

In a possible embodiment of the method, wherein the center console comprises said first anchoring piece, as well as the spring linkage means described above, step b) also comprises linking respective spring linkage means of the first anchoring piece and the structural body, pushing the structural body dragging it along the floor of the passenger compartment according to a longitudinal forward movement direction of the vehicle until linking the front portion of the structural body with the dashboard of the passenger compartment, or, by default, to a longitudinal displacement position such that the front portion of the center console is aligned with the dashboard to subsequently pivot the structural body in its sagittal plane until contacting the front portion of the structural body with the dashboard. Thus, and especially for those center console and dashboard designs where contact and mechanical linkage occur only at the upper surface of the front portion of the center console, contact between the two occurs only once the pivoting movement of the structural body with respect to the floor of the passenger compartment has been carried out.

In a possible embodiment of the method, wherein the center console comprises said second anchoring piece, as well as the pivoting linkage means described above, step b) also comprises linking respective pivoting linkage means of the second anchoring piece and the structural body, pushing the structural body (10) by dragging it along the floor of the passenger compartment according to a longitudinal forward movement direction of the vehicle while pivoting it with respect to the pivoting linkage means in the sagittal plane until linking the front and/or upper portion of the structural body ( 10) with the dashboard (S) of the passenger compartment.

In a possible embodiment of the method, wherein step b) also comprises linking respective vertical retention means, wherein linking respective vertical retention means preferably generates a downward displacement of the front part of the at least one perimeter trim piece, in such a way that it generates a contact pressure against the floor of the passenger compartment.

### Brief description of the drawings

The foregoing and other advantages and features will be more fully understood from the following detailed description of exemplary embodiments with reference to the accompanying drawings, which should be considered by way of illustration and not limitation, wherein:
Figure 1 illustrates a perspective view of an exemplary embodiment of the present center console in its use condition, that is, fixed to the floor of the passenger compartment.
Figure 2 illustrates a perspective view of the center console embodiment of Figure 1 without the perimeter trim piece, wherein the structural body is made up of a frame piece and an upper trim piece, which are not anchored to the floor of the passenger compartment, and wherein the first anchoring piece and the second anchoring piece of the present center console can also be seen, already anchored to the floor of the passenger compartment.
Figure 3 illustrates a longitudinal section view of detail F3 indicated in Figure 1, showing the overlapping flange of the structural body and the overlapping flange of the perimeter trim piece.
Figure 4 illustrates a longitudinal section view of detail F4 indicated in Figure 1, showing transverse retention means for the perimeter trim piece and the frame piece.
Figure 5 illustrates a longitudinal section view of detail F5 indicated in Figure 1, showing pivot means for the perimeter trim piece and the structural body.
Figure 6 illustrates an enlarged side view of the pivot means of the perimeter trim piece of Figure 5.
Figure 7 illustrates an enlarged side view of the pivot means of the frame piece of Figure 5.
Figure 8 illustrates an enlarged perspective view of the exemplary embodiment of the first anchoring piece.
Figure 9 illustrates an enlarged side view of the vertical retention means of the perimeter trim piece.
Figure 10 illustrates a longitudinal section view of detail F10 indicated in Figure 1, showing the vertical retention means for the first anchoring piece and the perimeter trim piece.
Figure 11 illustrates an enlarged view of the spring linkage means of the structural body and the first anchoring piece of Figure 1 in its use condition, wherein the front portion of the structural body has been vertically displaced upwards by the pressure exerted by the first anchoring piece.
Figure 12 illustrates an enlarged view of the exemplary embodiment of the second anchoring piece.
Figure 13 illustrates an enlarged rear view of the pivoting linkage means for the frame piece and the second anchoring piece.
Figure 14 illustrates a side view of the exemplary embodiment of the center console still not fixed to said first and second anchoring pieces.

### Detailed description of an exemplary embodiment

In view of the aforementioned figures, and in accordance with the numbering used, an exemplary embodiment of the present center console (1) is described below.

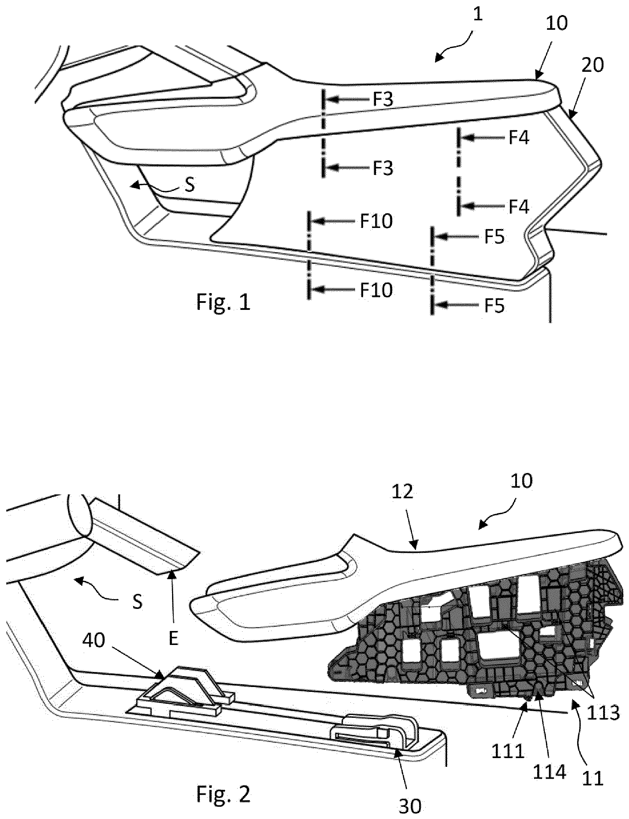

Figure 1 illustrates a perspective view of said exemplary embodiment, wherein the center console (1) is fixed to the floor and to the dashboard (S) of the passenger compartment. This figure shows the perimeter trim piece (20), the upper end of which is covered by the structural body (10) and the lower end of which is in contact with the floor. Said perimeter trim piece (20) preferably covers the side area of said center console (1). The configuration presented, in which the center console (1) makes contact both with the floor of the vehicle and in very specific areas of the dashboard (S) of the passenger compartment, makes it difficult for the fitting between the aforementioned components to be exact. For this reason, assembly mechanisms and methods that allow the variations and tolerances existing in the sizing of the different components to be offset are required, so that their visual aesthetics with the assembled assembly is optimal.

In this embodiment, the upper trim piece (12) is configured to be fixed both to the dashboard (S) and to a spine (E) that protrudes from the dashboard (S). In any case, there is a mechanical linkage between the upper trim piece (12) of the structural body (10) and the dashboard (S), which requires contact between both components to cause said mechanical linkage.

Figure 2 illustrates the center console (1) without the perimeter trim piece (20). In this embodiment, the structural body (10) is defined by a frame piece (11) or base and by an upper trim part (12) mechanically linked to each other. Also illustrated in this Figure 1 are the second anchoring piece (30) and the first anchoring piece (40) already fixed to the floor of the passenger compartment of the vehicle.

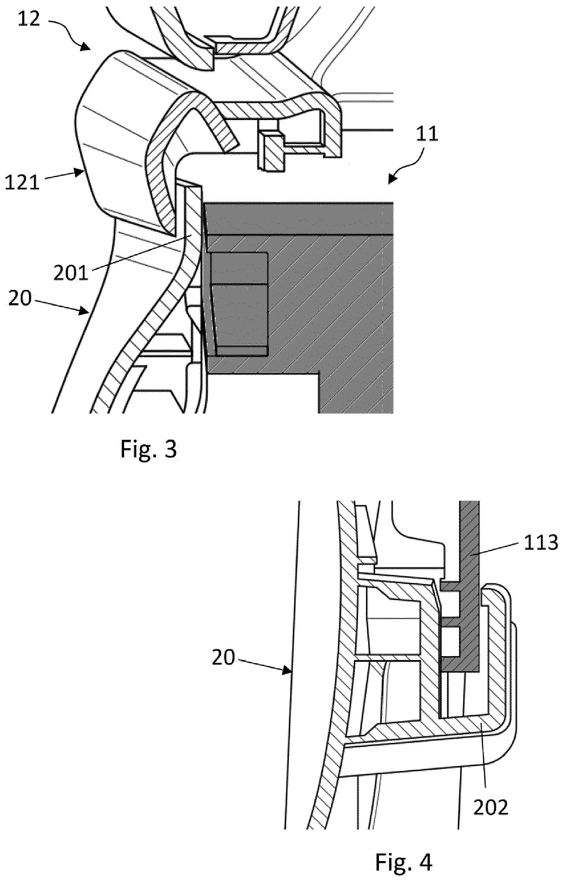

As illustrated in Figures 1 and 3, the center console (1) comprises a perimeter trim piece (20) configured to perimetrally cover the part of the frame piece (11) that is not covered by the upper trim piece (12). As can be seen in Figure 3, the upper trim piece (12) comprises an overlapping flange (121) arranged perimetrally and projecting downwards, generating a cavity suitable for housing a flange. In turn, the upper end of the perimeter trim piece (20) comprises an overlapping flange (201) projecting upwards and sized to fit snugly on the inner side of said overlapping flange (121). Likewise, said overlapping flange (201) is vertically sized to remain, at least partially, inside the overlapping flange (121) in a wide vertical displacement range of the perimeter trim piece (20) with respect to the upper trim piece (12), while the perimeter trim piece (20) is sized to cover the frame piece (11) from the floor of the passenger compartment to the overlapping flange (121).

Also in this exemplary embodiment, the non-visible side of the perimeter trim piece (20) comprises several transverse U-shaped protrusions (202), as transverse retention means configured to retain at least one transverse flange (113) in the transverse direction, that is, in the horizontal direction perpendicular to said longitudinal direction, as depicted in Figure 4. In turn, the structural body (10), specifically its frame piece (11) in this embodiment, comprises inverse L-shaped transverse flanges (113). Said U-shaped transverse protrusions (202) are sized in height similar to the dimension of said overlapping flange (201), to have an equivalent tolerance in the vertical connection thereof, while they are sized in width to receive the transverse flanges (113) snugly therein in the transverse direction. In this way, they only block the relative movement of the perimeter trim piece (20) with respect to the structural body (10) in the transverse direction, while allowing relative movement in any direction within the plane perpendicular to said transverse direction.

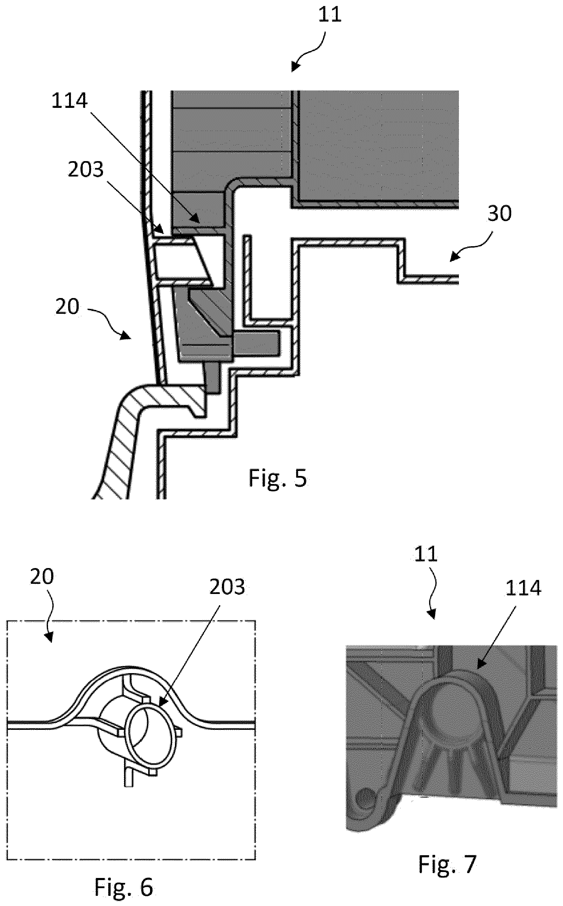

Additionally, in this embodiment, each side of the rear part of the frame piece (11) comprises a rotation gap (114), as pivot means to guide a rotational movement of the perimeter trim piece (20), one of them shown in Figures 5 and 7, which extends in the transverse direction of the passenger compartment and defining an axis of rotation in said same transverse direction of the passenger compartment. At the same time, each non-visible side of the perimeter trim piece (20) comprises respective rotation pivots (203), as corresponding pivot means, one of them shown in Figures 5 and 6. These rotation pivots (203) are configured to pivot around said rotation gap (114), allowing the perimeter trim piece (20) to pivot with respect to the structural body (10) in said sagittal plane. Said rotation gaps (114) and said rotation pivots (203) are arranged in a rear portion of, respectively, the frame piece (11) and the perimeter trim piece (20), linking both components according to a single degree of freedom, e.g., said rotation in the transverse direction of the passenger compartment. In this way, the front portion of both components is allowed to have said relative displacement with respect to each other, especially a displacement in the vertical direction, in order to offset the manufacturing and assembly tolerances of the assembly formed by the center console, the dashboard of the vehicle and the floor of the passenger compartment of the vehicle.

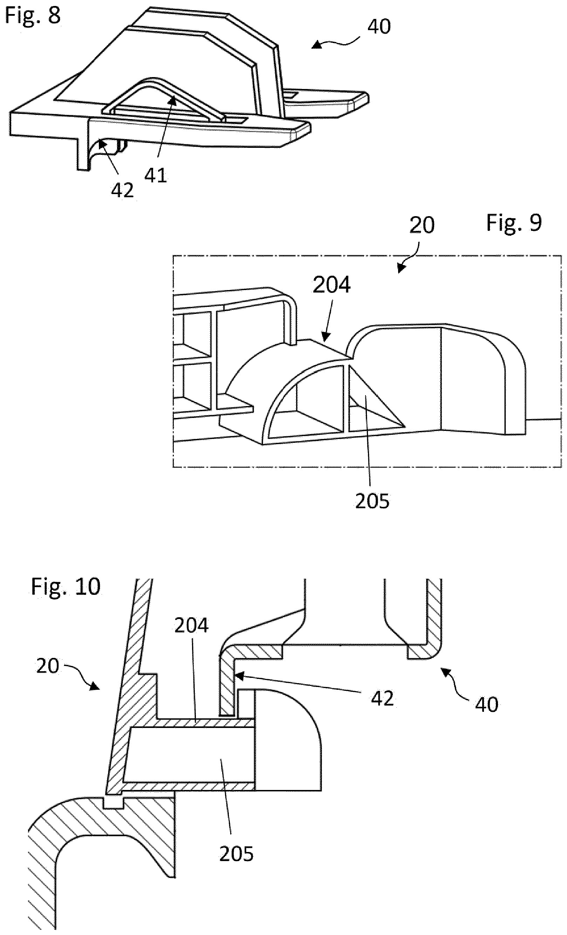

Figure 8 illustrates the first anchoring piece (40), which comprises a lower recess as a longitudinal guide (42). In turn, as can be seen in Figures 9 and 10, the perimeter trim piece (20) comprises, on each non-visible side and in a position coinciding with said longitudinal guide (42) in its use condition, transverse pivots (204) as retaining means, capable of being retained under the longitudinal guide (42). In this way, the front part of the perimeter trim piece (20) does not separate from the floor, regardless of the position in which the structural body (11) is located with respect to the floor. Specifically, the transverse pivots (204) of this embodiment comprise an inclined wall portion (205), configured to facilitate its placement in the longitudinal guide (42) while generating a downward displacement of the front part of the perimeter trim piece (20) when the structural body (10) is displaced forward, forcing the transverse pivots (204) of the perimeter trim piece (20) to be located below the longitudinal guide (42) of the second anchoring piece (40).

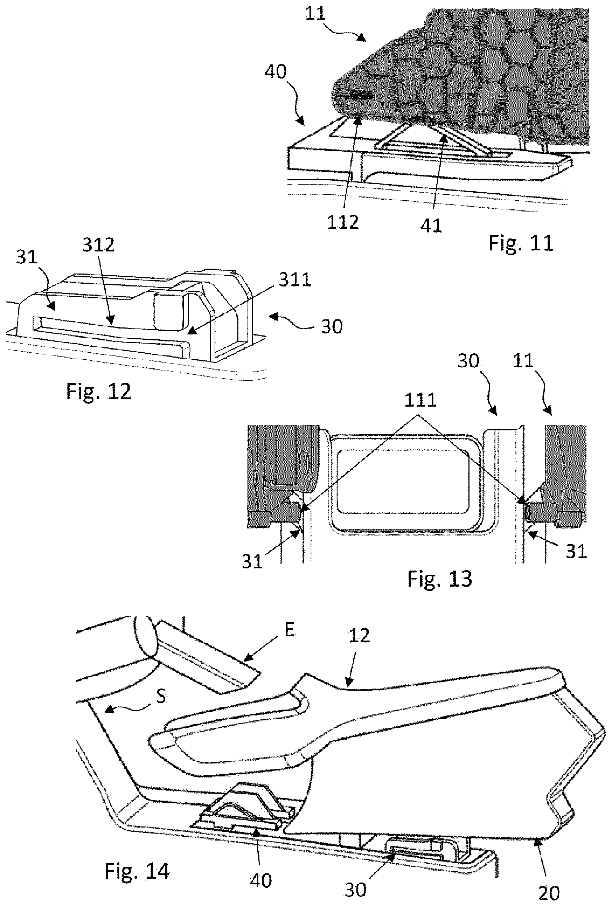

As can also be seen in Figure 8 and 11, the first anchoring piece (40) comprises a cantilevered, pyramid-shaped semi-rigid flange (41), that is, provided with an oblique portion that forms a ramp, as spring linkage means. In turn, as can be seen in Figure 11, the front part of the frame piece (11) comprises a rigid surface (112) at its lower end, as spring linkage means configured to collide with said semi-rigid flange (41) as the structural body (10) is displaced forward. Given the ramp shape, the semi-rigid flange (41) exerts such vertical pressure that it deflects the front part of the frame piece (11) in an upward direction and keeps it vertically raised. In this way, in a single dragging movement by the operator of the structural body (10) of the center console, an upward movement of the front portion of said center console occurs simultaneously, due to the vertical pushing generated by the contact between the semi-rigid flange (41) in the form of a ramp and the rigid surface (112).

Figure 12 shows the second anchoring piece (30) of this embodiment in detail, which, in turn, comprises a guide (31) on each lateral side extending in said longitudinal direction. In turn, the frame piece (11) comprises two pivots (111) at its lower end, one on each side and coaxial (visible in Figure 2 and in more detail in Figure 13), extending towards the interior in a direction perpendicular to the sagittal plane of the structural body (10), as pivoting linkage means suitable for being linked to the second anchoring piece (30). In this specific embodiment, both guides (31) are symmetrical to one another with respect to the sagittal plane of the second anchoring piece (30) and are defined by:
- an access opening (311) the vertical dimension of which is greater than that of the pivots (111),
- an elongated slot (312) in said longitudinal direction, the vertical dimension of which is substantially equal to the dimensions of the pivots (111), so as to restrict the vertical displacement of the pivot (111) that is inserted in it, and
- a transition section the vertical dimension of which decreases from that of the access opening (311) to that of the elongated slot (312) as it extends longitudinally from the access opening (311) to said elongated slot (312).

Therefore, the pivots (111) and the guides (31) are configured to be pivotally linked to each other, with the intention of allowing the structural body (10) to pivot in its sagittal plane with respect to the floor or dashboard of the vehicle. As can be seen in Figure 13, the pivots (111) are sized to form a single pivot axis, as well as to be inserted and slid through said guides (31), so that the pivoting linkage occurs in any of the positions of the pivots (111) in the respective guides (31).

As a result of the present center console (1) configuration, the linkage of its structural body (10) with the second anchoring piece (30) and the first anchoring piece (40) is facilitated, without the need for visual contact by the operator during the installation process. This makes it possible to comprise a perimeter trim piece (20) covering the frame piece (11) already linked to the structural body (10) by anchoring it to the floor of the passenger compartment, as shown in Figure 14.

The center console of the present invention allows that, in the event of a dragging movement of the center console in a longitudinal displacement approaching the dashboard (S), a simultaneous movement of the front portion of said center console is generated such that it pivots and makes an upward movement so that the upper trim piece (12) contacts said dashboard (S), and a simultaneous movement of the front portion of the perimeter trim piece (20) is generated such that it pivots and makes a downward movement to contact the floor of the passenger compartment. In this way, it is ensured that there is contact between the center console, the floor of the passenger compartment and the dashboard (S) so that there is a mechanical linkage between them, but at the same time, no gaps or slots are generated between them that produce visual or aesthetic defects, especially at the upper end of the at least one perimeter trim piece (20) and the upper portion of the structural body (10), by means of the overlapping flange (121) covering the overlapping flange (201) in any of the relative vertical displacement positions.

## Claims

1. Center console (1) for vehicles of the type that have a passenger compartment, the center console (1) comprising:
- a structural body (10) defined by a base and an upper portion, the base being anchorable to the floor of the passenger compartment, and
- at least one perimeter trim piece (20) configured to be linked to the structural body (10) and cover at least one perimeter portion of the structural body (10),
wherein the upper portion of the structural body (10) comprises an overlapping flange (121) arranged perimetrally and projecting downwards, while the upper end of the at least one perimeter trim piece (20) comprises an overlapping flange (201) projecting upwards and sized to fit snugly on the inner side of said overlapping flange (121), the at least one perimeter trim piece (20) being at least vertically displaceable with respect to the structural body (10), and wherein:
- said overlapping flange (201) is vertically sized to be at least partially covered by the overlapping flange (121) in any vertical displacement position of the at least one perimeter trim piece (20) in its use condition, and
- the at least one perimeter trim piece (20) is sized to cover said at least one perimeter portion of the structural body (10) from the floor of the passenger compartment to the overlapping flange (121),
- the structural body (10) and a non-visible side of the at least one perimeter trim piece (20) comprise respective transverse retention means configured to be retained together and limit a displacement of said at least one perimeter trim piece (20) with respect to the structural body (10) according to a direction substantially transverse to the sagittal plane of the structural body (10),
wherein the structural body (10) and a non-visible side of the at least one perimeter trim piece (20) comprise respective pivot means located at the rear part of the center console, arranged laterally and configured to be pivotally anchored together, allowing the at least one perimeter trim piece (20) to pivot with respect to the structural body in the sagittal plane.

2. Center console (1) according to claim 1, wherein the overlapping flange (121) generates a cavity to house the overlapping flange (201) of the at least one perimeter trim piece (20).

3. Center console (1) according to any of the preceding claims, the center console (1) comprising a first anchoring piece (40) configured to be anchored to the floor of the passenger compartment, wherein said first anchoring piece (40) and a non-visible side of the at least one perimeter trim piece (20) comprise respective vertical retention means, located remotely from said pivot means configured to be retained vertically with respect to each other, so that the portion of the at least one perimeter trim piece (20) in the one they are located in remains fixed against the floor of the passenger compartment.

4. Center console (1) according to claim 3, wherein one of the vertical retention means comprise a longitudinal guide (42) and the other vertical retention means comprise a transverse pivot (204) in a position coinciding with said longitudinal guide (42) in its use condition, suitable to be retained vertically in the longitudinal guide (42).

5. Center console (1) according to claim 4, wherein the longitudinal guide (42) and/or the transverse pivot (204) comprise an inclined wall portion, configured to generate a downward displacement of the portion of the at least one perimeter trim piece (20) in which it is located when the structural body (10) is displaced forward.

6. Assembly method for assembling a center console as described in any of the preceding claims, **characterized in that** it comprises the steps of:
a) fitting the overlapping flange (201), arranged at the upper end of the at least one perimeter trim piece (20), inside the overlapping flange (121) arranged perimetrally at the lower end of the upper portion of the structural body (10), such that said at least one perimeter trim piece (20) is displaceable, at least according to a vertical direction, with respect to the structural body (10),
b) fitting the transverse retention means together,
c) anchoring respective pivot means together, and
d) anchoring the structural body (10) to the floor of the passenger compartment.

7. Assembly method according to claim 6, wherein step a) includes housing the overlapping flange (201) of the at least one perimeter trim piece (20) in the cavity generated by the overlapping flange (121) of the structural body (10).

8. Assembly method according to any of claim 6, wherein step d) comprises applying a forward displacement movement to the structural body (10) according to a longitudinal forward movement direction of the vehicle, to mechanically fix it to the floor of the passenger compartment and, simultaneously with the movement applied to the structural body (10), drag the at least one perimeter trim piece (20) along the floor.

9. Assembly method according to claim 8, wherein step d) also comprises producing a pivoting movement of the at least one perimeter trim piece (20) around the pivoting means with respect to the body structural (10), such that the front part of the at least one perimeter trim piece (20) remains in contact with the floor.

10. Assembly method according to claim 8 or 9, wherein step d) also comprises linking respective vertical retention means.

11. Assembly method according to claim 10, wherein linking respective vertical retention means generates a downward displacement of the front part of the at least one perimeter trim piece (20), in such a way that it generates a contact pressure against the floor of the passenger compartment.

## Patentansprüche

1. Mittelkonsole (1) für Fahrzeuge des Typs, die einen Fahrgastraum aufweisen, die Mittelkonsole (1) umfassend:
- einen Strukturkörper (10), der durch eine Basis und einen oberen Abschnitt definiert ist, wobei die Basis an dem Boden des Fahrgastraums verankerbar ist, und
- mindestens ein Umfangsverkleidungsstück (20), das konfiguriert ist, um mit dem Strukturkörper (10) verknüpft zu werden und mindestens einen Umfangsabschnitt des Strukturkörpers (10) abzudecken,
wobei der obere Abschnitt des Strukturkörpers (10) einen überlappenden Flansch (121), der umfänglich angeordnet ist und nach unten vorsteht, umfasst, während das obere Ende des mindestens einen Umfangsverkleidungsstücks (20) einen überlappenden Flansch (201), der nach oben vorsteht und bemessen ist, um auf der Innenseite des überlappenden Flansches (121) eng zu passen, umfasst, wobei das mindestens eine Umfangsverkleidungsstück (20) hinsichtlich des Strukturkörpers (10) mindestens vertikal verschiebbar ist, und wobei:
- der überlappende Flansch (201) vertikal bemessen ist, um in einer beliebigen vertikalen Verschiebungsposition des mindestens einen Umfangsverkleidungsstücks (20) in seinem Verwendungszustand mindestens teilweise durch den überlappenden Flansch (121) abgedeckt zu sein, und
- das mindestens eine Umfangsverkleidungsstück (20) bemessen ist, um den mindestens einen Umfangsabschnitt des Strukturkörpers (10) von dem Boden des Fahrgastraums bis zu dem überlappenden Flansch (121) abzudecken,
- der Strukturkörper (10) und eine nicht sichtbare Seite des mindestens einen Umfangsverkleidungsstücks (20) jeweilige Querhaltemittel, die konfiguriert sind, um zusammengehalten zu werden und eine Verschiebung des mindestens einen Umfangsverkleidungsstücks (20) hinsichtlich des Strukturkörpers (10) gemäß einer Richtung im Wesentlichen quer zu der Sagittalebene des Strukturkörpers (10) zu begrenzen, umfassen,
wobei der Strukturkörper (10) und eine nicht sichtbare Seite des mindestens einen Umfangsverkleidungsstücks (20) jeweilige Schwenkmittel umfassen, die sich an dem hinteren Teil der Mittelkonsole befinden, seitlich angeordnet und konfiguriert sind, um schwenkbar miteinander verankert zu werden, wodurch dem mindestens einen Umfangsverkleidungsstück (20) ermöglicht wird, hinsichtlich des Strukturkörpers in der Sagittalebene zu schwenken.

2. Mittelkonsole (1) nach Anspruch 1, wobei der überlappende Flansch (121) einen Hohlraum erzeugt, um den überlappenden Flansch (201) des mindestens einen Umfangsverkleidungsstücks (20) aufzunehmen.

3. Mittelkonsole (1) nach einem der vorstehenden Ansprüche, die Mittelkonsole (1) umfassend ein erstes Verankerungsstück (40), das konfiguriert ist, um an dem Boden des Fahrgastraums verankert zu werden, wobei das erste Verankerungsstück (40) und eine nicht sichtbare Seite des mindestens einen Umfangsverkleidungsstücks (20) jeweilige vertikale Haltemittel umfassen, die sich von den Schwenkmitteln entfernt befinden, konfiguriert um hinsichtlich zueinander vertikal gehalten zu werden, sodass der Abschnitt des mindestens einen Umfangsverkleidungsstücks (20), in dem einen, in dem sie sich befinden, gegen den Boden des Fahrgastraums fixiert bleibt.

4. Mittelkonsole (1) nach Anspruch 3, wobei eines der vertikalen Haltemittel eine Längsführung (42) umfasst und das andere vertikale Haltemittel einen Querzapfen (204) in einer Position, die in Verwendungsposition mit der Längsführung (42) zusammenfällt, umfasst, geeignet, um in der Längsführung (42) vertikal gehalten zu werden.

5. Mittelkonsole (1) nach Anspruch 4, wobei die Längsführung (42) und/oder der Querzapfen (204) einen geneigten Wandabschnitt umfassen, der konfiguriert ist, um eine Verschiebung nach unten des Abschnitts des mindestens einen Umfangsverkleidungsstücks (20), in dem es sich befindet, zu erzeugen, wenn der Strukturkörper (10) nach vorne verschoben wird.

6. Montageverfahren zum Montieren einer Mittelkonsole nach einem der vorstehenden Ansprüche, **dadurch gekennzeichnet, dass** es die folgenden Schritte umfasst:
a) Einpassen des überlappenden Flansches (201), der an dem oberen Ende des mindestens einen Umfangsverkleidungsstücks (20) angeordnet ist, in den überlappenden Flansch (121), der an dem unteren Ende des oberen Abschnitts des Strukturkörpers (10) umfänglich angeordnet ist, derart, dass das mindestens eine Umfangsverkleidungsstück (20) verschiebbar ist, mindestens gemäß einer vertikalen Richtung, hinsichtlich des Strukturkörpers (10),
b) Zusammenpassen der Querhaltemittel,
c) miteinander Verankern der jeweiligen Schwenkmittel, und
d) Verankern des Strukturkörpers (10) an dem Boden des Fahrgastraums.

7. Montageverfahren nach Anspruch 6, wobei Schritt a) das Aufnehmen des überlappenden Flansches (201) des mindestens einen Umfangsverkleidungsstücks (20) in dem Hohlraum, der durch den überlappenden Flansch (121) des Strukturkörpers (10) erzeugt wird, umfasst.

8. Montageverfahren nach einem von Anspruch 6, wobei Schritt d) ein Ausüben einer Verschiebungsbewegung nach vorne auf den Strukturkörper (10) gemäß einer Längsbewegungsbewegungsrichtung nach vorne des Fahrzeugs umfasst, um ihn an dem Boden des Fahrgastraums mechanisch zu fixieren, und gleichzeitig mit der Bewegung, die auf den Strukturkörper (10) ausgeübt wird, das mindestens eine Umfangsverkleidungsstück (20) den Boden entlangzuziehen.

9. Montageverfahren nach Anspruch 8, wobei Schritt d) ferner ein Produzieren einer Schwenkbewegung des mindestens einen Umfangsverkleidungsstücks (20) um die Schwenkmittel hinsichtlich des Strukturkörpers (10) umfasst, derart, dass der vordere Teil des mindestens einen Umfangsverkleidungsstücks (20) in Kontakt mit dem Boden bleibt.

10. Montageverfahren nach Anspruch 8 oder 9, wobei Schritt d) ebenso das Verknüpfen der jeweiligen vertikalen Haltemittel umfasst.

11. Montageverfahren nach Anspruch 10, wobei das Verknüpfen der jeweiligen vertikalen Haltemittel eine Verschiebung des vorderen Teils des mindestens einen Umfangsverkleidungsstücks (20) nach unten erzeugt, auf eine derartige Weise, dass ein Kontaktdruck gegen den Boden des Fahrgastraums erzeugt wird.

## Revendications

1. Console centrale (1) pour des véhicules du type qui ont un habitacle, la console centrale (1) comprenant :
- un corps structurel (10) défini par une base et une partie supérieure, la base pouvant être ancrée au plancher de l'habitacle, et
- au moins une pièce de garniture périmétrique (20) conçue pour être reliée au corps structurel (10) et couvrir au moins une partie périmétrique du corps structurel (10),
dans laquelle la partie supérieure du corps structurel (10) comprend un rebord de chevauchement (121) disposé périmétriquement et faisant saillie vers le bas, tandis que l'extrémité supérieure de l'au moins une pièce de garniture périmétrique (20) comprend un rebord de chevauchement (201) faisant saillie vers le haut et dimensionné pour s'adapter parfaitement au côté interne dudit rebord de chevauchement (121), l'au moins une pièce de garniture périmétrique (20) pour se déplacer au moins verticalement par rapport au corps structurel (10), et dans laquelle :
- ledit rebord de chevauchement (201) est dimensionné verticalement pour être au moins partiellement recouvert par le rebord de chevauchement (121) dans toute position de déplacement vertical de l'au moins une pièce de garniture périmétrique (20) dans sa condition d'utilisation, et
- l'au moins une pièce de garniture périmétrique (20) est dimensionnée pour couvrir ladite au moins une partie périmétrique du corps structurel (10) à partir du plancher de l'habitacle vers le rebord de chevauchement (121),
- le corps structurel (10) et un côté non visible de l'au moins une pièce de garniture périmétrique (20) comprennent des moyens de retenue transversaux respectifs conçus pour être retenus ensemble et limiter un déplacement de ladite au moins une pièce de garniture périmétrique (20) par rapport au corps structurel (10) selon une direction sensiblement transversale au plan sagittal du corps structurel (10),
dans laquelle le corps structurel (10) et un côté non visible de l'au moins une pièce de garniture périmétrique (20) comprennent des moyens de pivotement respectifs situés au niveau de la partie arrière de la console centrale, disposés latéralement et conçus pour être ancrés ensemble de manière pivotante, permettant à l'au moins une pièce de garniture périmétrique (20) de pivoter par rapport au corps structurel dans le plan sagittal.

2. Console centrale (1) selon la revendication 1, dans laquelle le rebord de chevauchement (121) génère une cavité destinée à loger le rebord de chevauchement (201) de l'au moins une pièce de garniture périmétrique (20).

3. Console centrale (1) selon l'une quelconque des revendications précédentes, la console centrale (1) comprenant une première pièce d'ancrage (40) conçue pour être ancrée au plancher de l'habitacle, dans laquelle ladite première pièce d'ancrage (40) et un côté non visible de l'au moins une pièce de garniture périmétrique (20) comprennent des moyens de retenue verticaux respectifs, situés à distance desdits moyens de pivotement, conçus pour être retenus verticalement l'un par rapport à l'autre, de sorte que la partie de l'au moins une pièce de garniture périmétrique (20) dans laquelle ils sont situés reste fixée contre le plancher de l'habitacle.

4. Console centrale (1) selon la revendication 3, dans laquelle l'un des moyens de retenue verticaux comprend un guide longitudinal (42) et l'autre moyen de retenue vertical comprend un pivot transversal (204) dans une position coïncidant avec ledit guide longitudinal (42) dans sa condition d'utilisation, apte à être retenu verticalement dans le guide longitudinal (42).

5. Console centrale (1) selon la revendication 4, dans laquelle le guide longitudinal (42) et/ou le pivot transversal (204) comprend(nent) une partie de paroi inclinée, conçue pour générer un déplacement vers le bas de la partie de l'au moins une pièce de garniture périmétrique (20) dans laquelle elle est située lorsque le corps structurel (10) se déplace vers l'avant.

6. Procédé d'assemblage destiné à assembler une console centrale selon l'une quelconque des revendications précédentes, **caractérisé en ce qu'il** comprend les étapes consistant à :
a) monter le rebord de chevauchement (201), disposé au niveau de l'extrémité supérieure de l'au moins une pièce de garniture périmétrique (20), à l'intérieur du rebord de chevauchement (121) disposé périmétriquement au niveau de l'extrémité inférieure de la partie supérieure du corps structurel (10), de sorte que ladite au moins une pièce de garniture périmétrique (20) peut se déplacer, au moins selon une direction verticale, par rapport au corps structurel (10),
b) monter ensemble les moyens de retenue transversaux,
c) ancrer ensemble des moyens de pivotement respectifs, et
d) ancrer le corps structurel (10) au plancher de l'habitacle.

7. Procédé d'assemblage selon la revendication 6, dans lequel l'étape a) comporte le logement du rebord de chevauchement (201) de l'au moins une pièce de garniture périmétrique (20) dans la cavité générée par le rebord de chevauchement (121) du corps structurel (10).

8. Procédé d'assemblage selon l'une quelconque de la revendication 6, dans lequel l'étape d) comprend l'application d'un mouvement de déplacement vers l'avant au corps structurel (10) selon une direction de mouvement longitudinal vers l'avant du véhicule, afin de le fixer mécaniquement au plancher de l'habitacle et, simultanément avec le mouvement appliqué au corps structurel (10), de faire glisser l'au moins une pièce de garniture périmétrique (20) le long du plancher.

9. Procédé d'assemblage selon la revendication 8, dans lequel l'étape d) comprend également la production d'un mouvement de pivotement de l'au moins une pièce de garniture périmétrique (20) autour du moyen de pivotement par rapport au corps structurel (10), de sorte que la partie avant de l'au moins une pièce de garniture périmétrique (20) reste en contact avec le plancher.

10. Procédé d'assemblage selon la revendication 8 ou 9, dans lequel l'étape d) comprend également la liaison de moyens de retenue verticaux respectifs.

11. Procédé d'assemblage selon la revendication 10, dans lequel la liaison de moyens de retenue verticaux respectifs génère un déplacement vers le bas de la partie avant de l'au moins une pièce de garniture périmétrique (20), de telle sorte qu'elle génère une pression de contact contre le plancher de l'habitacle.
